# EUROPÄISCHE PATENTSCHRIFT

(11) **EP 1 250 024 B1**
(45) Veröffentlichungstag und Bekanntmachung des Hinweises auf die Patenterteilung: **23.11.2005**
(21) Anmeldenummer: 02360093.5
(22) Anmeldetag: 20.03.2002
(51) Int. Cl.: H04Q 11/00

(54) **Optischer Crossconnect**
Optical cross connect
Brasseur optique

(30) Priorität: 12.04.2001 DE 10118295
(43) Veröffentlichungstag der Anmeldung: 16.10.2002
(73) Patentinhaber: ALCATEL, 75008 Paris (FR)
(72) Erfinder: Schäfer, Udo, 73730 Esslingen (DE); Diehl, Thomas, 71229 Leonberg (DE); Zoll, Hermann, 71706 Markgröningen (DE)
(74) Vertreter: Urlichs, Stefan

(56) Entgegenhaltungen:
- EP-A- 0 740 441
- EP-A- 0 827 357
- SUNG-HYUK CHOI ET AL: "Fault detection and localization method for SDH BDCS with complex switch" DEVICES, CIRCUITS AND SYSTEMS, 1998. PROCEEDINGS OF THE 1998 SECOND IEEE INTERNATIONAL CARACAS CONFERENCE ON ISLA DE MARGARITA, VENEZUELA 2-4 MARCH 1998, NEW YORK, NY, USA,IEEE, US, 2. März 1998 (1998-03-02), Seiten 189-193, XP010295620 ISBN: 0-7803-4434-0

## Beschreibung

Die Erfindung betrifft einen optischen Crossconnect zum Schalten von optischen Nachrichtensignalen auf der physikalischen Schicht in einem optischen Transportnetz.

Zur Datenübertragung in Transportnetzen werden heute hauptsächlich Systeme eingesetzt, die nach den Empfehlungen der ITU-T für SDH (Synchrone digitale Hierarchie) und SONET (synchronous optical network) arbeiten. Zu übertragende Nutzdatensignale werden dabei in Multiplexeinheiten verpackt und gemäß einer Multiplexvorschrift zu einem zeitlagen-gemultiplexten Nachrichtensignal verschachtelt. Diese wird dann als optisches Nachrichtensignal über Lichtleiter des Netzes übertragen, wobei in zwischengeschalteten Netzelementen des Transportnetzes die Nachrichtensignale wieder in die einzelnen darin enthalten Multiplexeinheiten zerlegt und in neuer Zusammenstellung wieder verschachtelt werden können. Auf diese Weise werden Verbindungen in einem SDH- oder SONET-basierten Transportnetz geschaltet.

Daneben finden zunehmend auch optische Netze Anwendung, in denen wellenlängen-gemultiplexte optische Nachrichtensignale übertragen werden. Solche wellenlängen-gemultiplexten Signale bestehen aus mehreren optischen Kanälen, die durch jeweils eine Wellenlänge repräsentiert werden. Dadurch lassen sich über einen einzigen Lichtleiter mehrere optische Signale parallel übertragen. Für solche optischen Netze werden Netzelemente benötigt, die in der Lage sind, einzelne Wellenlängen aus dem wellenlängen-gemultiplexten Nachrichtensignal auszukoppeln und einzufügen (Add/Drop-Multiplexer). Zudem werden Netzelemente benötigt, die solche wellenlängengemultiplexten Nachrichtensignale in die einzelnen darin enthalten Wellenlängen zerlegen und in neuer Zusammenstellung wieder multiplexen können, um Verbindungen in dem optischen Netzwerk zu schalten (Crossconnects). Die Realisierung der beschriebenen Netzelemente ist technisch sehr aufwendig und die Entwicklung dieser Geräte befindet sich derzeit noch in den Anfängen. Ein Standard für die optischen Kanäle ist derzeit noch in der Ausarbeitung. So wird derzeit über eine neue Multiplexhierarchie mit der Bezeichnung "Optical Channel (OCh)" diskutiert. Diese neue Multiplexhierarchie soll Multiplexebenen mit Bitraten von 2,66 Gbit/sec sowie Vielfache davon (Faktor vier), nämlich 10,7x Gbit/sec und 43,x Gbit/sec aufweisen und ist für die optische Nachrichtenübertragung im Wellenlängenmultiplex (WDM) vorgesehen.

Des weiteren werden derzeit sogenannte optische Crossconnects entwickelt, die optische Nachrichtensignale beliebigen Formates wie SONET, ATM, IP schalten sollen. Sie enthalten eine zentrale Raum-Schaltmatrix, die für die zu schaltenden Nachrichtensignale transparent sein soll. Solche Crossconnects sind bekannt. Ein Beispiel ist ein optischer Crossconnects, der mit einer SONET-basierten, getakteten elektrischen Raumschaltmatrix arbeitet, die mit dem Rahmentakt von OC-48 arbeitet. Volle Transparenz für nicht SONET-basierte Nachrichtensignale ist daher nicht gewährleistet.

Ein weiteres Beispiel ist der 20000 Series Wavelength Router der Fa. Monterey. In einer im Internet veröffentlichten Broschüre zu diesem Produkt wird beschrieben, daß dieser aus einem als "Switch Core" bezeichneten Teilsystem und I/O-Karten besteht, die OC-48/STM-16 Signale unterstützen und über kurzreichweitige optische Schnittstellen (Ultra-Short-Reach-Optics™) mit dem Switch Core verbunden sind. Der Switch Core hat eine Schaltkapazität von 256 OC-48 oder 64 OC-192 Äquivalenten. Er basiert somit ebenfalls auf der Rahmentaktrate von SONET und ist daher nicht voll transparent für alle Signaltypen.

Des weiteren wird in der Anmeldung EP 0827357 A einen optischen Crossconnect mit Überwachnung von Übertragungsfehler vorgestellt.

Eine Aufgabe der vorliegenden Erfindung besteht deshalb darin, einen optischen Crossconnect anzugeben, der Bitraten- und Protokoll-unabhängig arbeitet und zusätzlich Übertragungsfunktionen für zumindest einen Protokolltyp gewährleistet. Eine weitere Aufgabe der Erfindung besteht darin, ein Verfahren zum Bitraten- und Protokoll-unabhängigen Schalten von optischen Nachrichtensignalen anzugeben.

Die Aufgabe wird hinsichtlich des optischen Crossconnects gelöst durch die Merkmale des Anspruchs 1 und hinsichtlich des Verfahrens durch die Merkmale des Anspruch 7. Vorteilhafte Ausgestaltungen sind den abhängigen Ansprüchen zu entnehmen.

Ein Vorteil des erfindungsgemäßen Crossconnects besteht darin, daß er eine remote-steuerbare Verschaltung optischer Nachrichtensignale beliebigen Signalformats über ein zentrales Netzmanagementsystem erlaubt.

Weitere Vorteile bestehen darin, daß der erfindungsgemäße Crossconnect Kosteneinsparungen bei der Herstellung und dem Betrieb bringt. Insbesondere die Eingangs-/Ausgangs-Schnittstellen sind aufgrund ihres einfachen Aufbaus äußerst kostengünstig. Zudem ist der optische Crossconnect äußerst flexibel in allen bestehenden und zukünftigen Netzen einsetzbar und offen zu allen existierenden Protokolltypen. Derzeitige Halbleitertechnik erlaubt einen Einsatz bis zu Bitraten von 20Gbit/sec.

Von besonderem Vorteil ist es, eine an einen bestimmten Protokolltyp angepaßte Überwachungseinrichtung an die Schaltmatrix anzuschließen, so daß Signale dieses Protokolltyps von der Schaltmatrix zu der Überwachungseinrichtung geleitet und von dieser wieder zurück zur Schaltmatrix geleitet werden können. Dadurch wird eine Überwachung von Nachrichtensignalen dieses Protokolltyps ermöglicht ohne die Transparenz und Funktionalität des Crossconnects zu beeinträchtigen. Durch die Überwachungseinrichtung kann für Nachrichtensignale dieses Protokolltyps eine Schutzfunktion eingerichtet und eine vorgegebene Signalqualität gewährleistet werden. Eine besonders vorteilhafte Ausgestaltung dieser Überwachungseinrichtung überwacht das B1-Byte und/oder das JO-Byte von SDH oder SONET Signalen. Dadurch kann der optische Crossconnect in bestehende SDH- oder SONET-Systeme integriert werden.

Zusammen mit einen Wellenlängenmultiplexer kann der erfindungsgemäße Crossconnect in WDM-Netzen eingesetzt werden. Dabei ist es vorteilhaft, daß typische Themen im WDM-Layer wie Wellenlängenzuweisung und Wellenlängenumwandlung von der Schaltfunktion in einem optischen Netz entkoppelt sind.

Im folgenden wird die Erfindung anhand der Figuren 1-5 in einem Ausführungsbeispiel erläutert. Es zeigt:
- Figur 1:: ein Blockdiagramm des erfindungsgemäßen optischen Crossconnects,
- Figur 2:: ein Netzwerk mit vier optischen Crossconnects,
- Figur 3:: das Netzwerk aus Figur 2 mit einer eingerichteten Schutzschaltung,
- Figur 4:: den erfindungsgemäßen optischen Crossconnect mit einem daran angeschlossenen externen Wellenlängenmultiplexer und
- Figur 5:: den erfindungsgemäßen optischen Crossconnect mit einem daran angeschlossenen externen Add/Drop-Multiplexer.

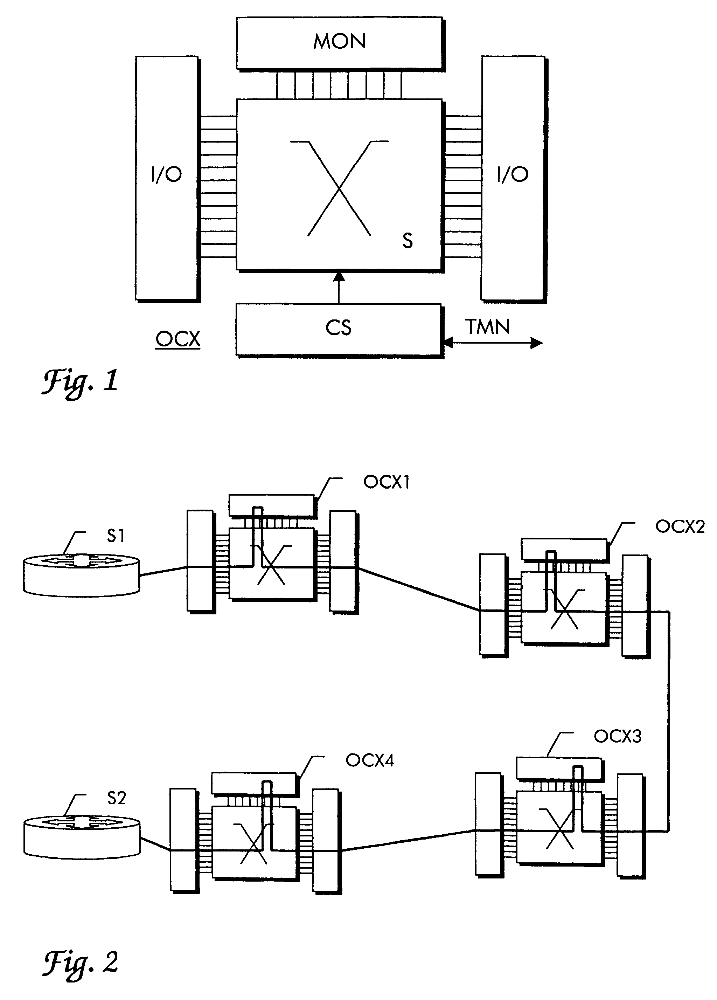

Der in Figur 1 dargestellte optische Crossconnect OCX besitzt eine elektrische Schaltmatrix S, eine Eingangs/Ausgangs-Stufe I/O, eine Überwachungsschaltung MON und eine Steuerung CS. Die Schaltmatrix S hat eine Anzahl von Anschlüssen, wobei ein Teil der Anschlüsse mit der Eingangs/Ausgangs-Stufe I/O und der Rest der Anschlüsse mit der Überwachungsschaltung MON verbunden ist. Die Schaltmatrix S hat zudem einen Steuerungseingang, der mit der Steuerungseinrichtung CS verbunden ist. Die Eingangs/Ausgangs-Stufe besteht aus breitbandigen optischen Eingängen, die jeweils zum Empfangen eines optischen Nachrichtensignals mit einem einzigen optischen Kanal vorgesehen sind sowie eine Anzahl optischer Ausgänge, die jeweils zum Senden eines optischen Nachrichtensignals mit einem einzigen optischen Kanal vorgesehen sind.

Die optischen Eingänge besitzen jeweils einen O/E-Konverter, der ein optisches Nachrichtensignal in ein elektrisches Nachrichtensignal umwandelt. Analog besitzen die optischen Ausgänge einen E/O-Konverter, der ein elektrisches Nachrichtensignal von der Schaltmatrix S in ein zu sendendes optisches Nachrichtensignal umwandelt.

Die Schaltmatrix S ist eine transparente Raumschaltmatrix, die eingangsseitig mit den optischen Eingängen und ausgangsseitig mit den optischen Ausgängen der Eingangs/Ausgangs-Stufe I/O elektrisch verbunden ist und die elektrischen Nachrichtensignale von den optischen Eingängen zu den optischen Ausgängen unter Kontrolle der Steuerungsschaltung CS wahlfrei verschaltet. Vorteilhaft arbeitet die Schaltmatrix ungetaktet. Ähnliche ungetaktete Schaltmatrizen wurden bislang bei deutlich niedrigerer Bitrate in IP-Routern verwendet. Basierend auf modernster Si/Ge-BiCMOS-Halbleitertechnologie kann die Schaltmatrix S leicht für eine maximale Übertragungsrate in der Größenordnung von 12 Gbit/sec ausgelegt werden. Laborexperimente zeigen, daß eine solche Schaltmatrix aus Si/Ge-BiCMOS-Halbleitern sogar bis zu einer Übertragungsrate von 20 Gbit/sec eingesetzt werden kann.

Ein Grundgedanke der Erfindung liegt darin, eine Bitraten-transparente Schaltmatrix in einem optischen Crossconnect einzusetzen und die Eingangs/Ausgangs-Stufe aus einfachen, breitbandigen optischen Empfängern und Sendern aufzubauen. An die Schaltmatrix ist eine Überwachungseinrichtung angeschlossen, so daß Nachrichtensignale von der Schaltmatrix zur Überwachungseinrichtung und zurück zur Schaltmatrix geschleift werden können um übertragungstechnische Überwachungsfunktionen für Nachrichtensignale zumindest eines vorbestimmten Protokolltyps durchzuführen.

Vorteilhaft arbeitet die Schaltmatrix ungetaktet, d.h. ihre Schaltfunktion gründet nicht auf einem internen Bit- und Rahmentakt. Dadurch können beliebige Signale bei nahezu beliebiger Bitrate unabhängig vom verwendeten Protokolltyp transparent durchgeschaltet werden. Die Eingänge und Ausgänge arbeiten ebenfalls völlig Bitraten- und Protokoll-unabhängig, da sie lediglich eine O/E- beziehungsweise E/O-Umsetzung durchführen. So werden in den Empfängern sehr einfache O/E-Umsetzer eingesetzt, bestehend im einfachsten Fall aus einer einzigen Photodiode. Zusätzlich kann eine Bitraten-unabhängige Signalaufbereitung (Signal Recovering) des elektrischen Signals vorgenommen werden, so daß das resultierende Digitalsignal definierte Pegelzustände mit steilen Flankenverläufen aufweist. Dies kann beispielsweise mit einem Schmitt-Trigger durchgeführt werden.

In den Sendern werden entsprechend einfache optische Sendeelemente wie z.B. direktmodulierte breitbandige Halbleiterlaser eingesetzt. Dies trägt der Tatsache Rechnung, daß die Eingänge und Ausgänge jeweils zum Empfangen beziehungsweise Senden eines optischen Nachrichtensignals mit nur einem einzigen optischen Kanal im Welenlängenbereich von 1300nm oder 1500nm vorgesehen sind, bei dem die genaue Wellenlänge im Gegensatz zu WDM-Systemen jedoch keine Rolle spielt. Begrenzt wird die Funktion dieses Crossconnects lediglich durch die maximale Bitrate von etwa 12 oder sogar 20 Gbit/sec, die von der Schaltmatrix aufgrund des allen Halbleitern charakteristischen Bandpaß-Verhaltens noch transparent durchgeschaltet werden kann.

Durch diesen Aufbau ist ein einfach aufgebauter aber äußerst leistungsfähiger optischer Crossconnect geschaffen, der für alle Arten von optischen Signalen im vorgesehenen Wellenlängenbereich gleichermaßen eingesetzt werden kann. Dadurch können auf der physikalischen Schicht eines optischen Netzwerkes Verbindungen geschaltet werden, wobei das optische Netz gleichermaßen von verschiedenen Diensten mit unterschiedlichen Übertragungsprotokollen, wie z.B. IP, ATM oder SDH, genutzt werden kann.

In Figur 1 ist eine Überwachungseinrichtung MON gezeigt, die mit mehreren Anschlüssen der Schaltmatrix S verbunden ist. Aufgabe der Überwachungseinrichtung ist es, für Nachrichtensignale von vorbestimmter Bitrate und Protokoll-Typ eine Fehlerüberwachung durchzuführen. Eine solche Fehlerüberwachung wird nun am Beispiel von SDH-Signalen näher erläutert.

In G.707 (1996), Kapitel 9.2.2.4 ist ein Byte im Overhead von STM-N Rahmen für eine Prüfsumme reserviert. Dieses Byte wird als B1-Byte bezeichnet, die Prüfsumme wird mit BIP-8 (Bit Interleaved Parity 8) bezeichnet. Der BIP-8 Code ist eine Prüfsumme mit gerader Parität, die über alle Bits des vorhergehenden Rahmens nach dessen Verwürfelung (scrambling) berechnet wird und in das B1-Byte des aktuellen Rahmens geschrieben wird, bevor dieser verwürfelt wird.

Ein solcher BIP-X Code ist definiert für ein Verfahren zur Fehlerüberwachung. Er wird vom sendenden Gerät über einen vorbestimmten Teil des zu sendenden Signals berechnet, und zwar in der Weise, daß das erste Bit des Codes eine gerade Parität über alle ersten Bits aller X Bit langen Sequenzen des abgedeckten Signalteil erzeugt, das zweite Bit des Codes eine gerade Parität über alle zweiten Bits aller X Bit langen Sequenzen und so weiter. Gerade Parität bedeutet, daß die BIP-X Bits so besetzt werden, daß eine gerade Anzahl von (logischen) Einsen in der überwachten Partition des Signals entsteht. Die überwachte Partition umfaßt alle Bits in derselben Bitposition innerhalb der X Bit langen Sequenzen im abgedeckten Signalteil, wobei dieser Signalteil den BIP-X Code selbst enthält.

Die Überwachungseinrichtung MON ist im Ausführungsbeispiel so ausgelegt, daß sie für jeden STM-N Rahmen in einem Nachrichtensignal den BIP-8 Code berechnet, den BIP-8 Code aus dem B1-Byte des folgenden Rahmens ausliest und beide miteinander vergleicht. Wird eine Diskrepanz festgestellt, so ist ein Fehler aufgetreten.

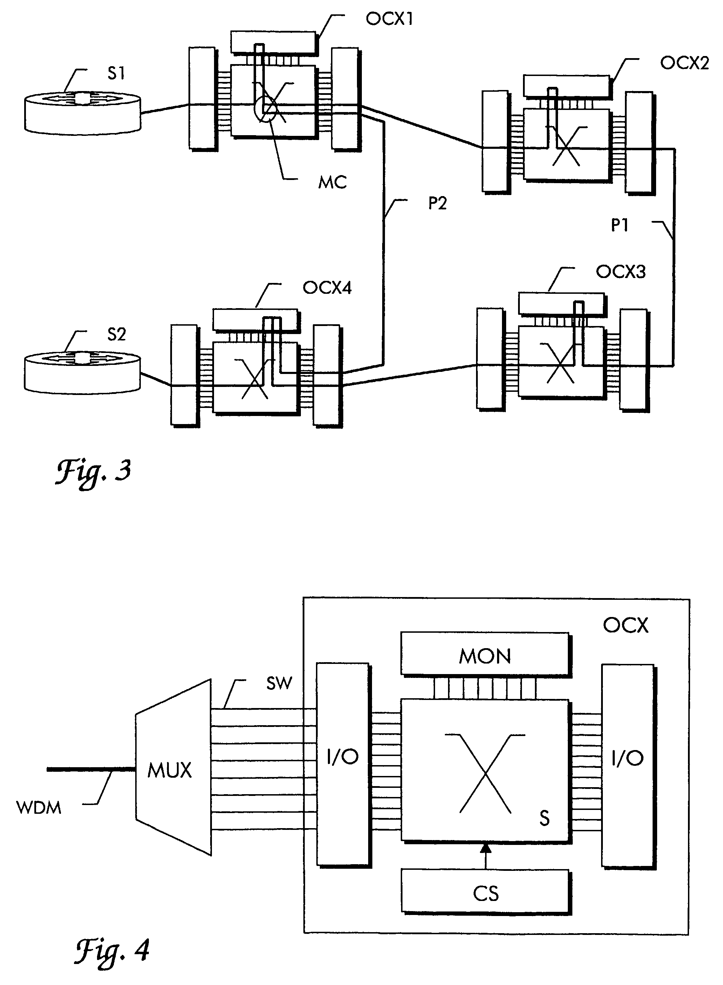

Nun bestimmt die Überwachungseinrichtung MON verschiedene Parameter, welche die Übertragungsqualität charakterisieren. Dabei werden die aufgetretenen und anhand der BIP-8-Berechnung festgestellten Fehler über vorbestimmte Zeitspannen - typischerweise 15 min und 24 h - bestimmt und gezählt. Typische Parameter hierfür sind: "*background block* errors", "*errored seconds*" und "*severely errored seconds*". Eine "*errored second*" liegt vor, wenn in einem Sekundenintervall Fehler vorliegen und jedoch weniger als 30% der Rahmen fehlerhaft sind. Eine "*severely errored*" *second* liegt vor, wenn in einem Sekundenintervall mehr als 30% der empfangenen Rahmen fehlerhaft sind. Die Parameter werden über 15 min und über 24 h addiert. Diese Werte stellen Überwachungsdaten dar. Sie ermöglichen eine Kontrolle der tatsächlichen Übertragungsqualität und eine Schutzschaltung, indem eine Umschaltung auf eine redundante Ersatzleitung vorgenommen wird, wenn eine vorgegebene Übertragungsqualität unterschritten wird. Hierauf wird an späterer Stelle in Zusammenhang mit Figur 3 noch näher eingegangen.

Zusätzlich oder alternativ ist es vorteilhaft, in der Überwachungseinrichtung noch eine zweite Überwachungsfunktion für SDH-Signale durchzuführen. Gemäß ITU-T G.707 Kapitel 9.2.2.2 ist im sogenannten JO-Byte eine sieben Bit lange Prüfsumme CRC-7 (Cyclic Redundancy Check) enthalten. Die JO-Bytes von 16 aufeinanderfolgenden STM-N Rahmen bilden einen 16-Byte Rahmen, der den sogenannten Section Access Point Identifier (API) enthält. Der API wird fortwährend wiederholt, so daß die empfangende Seite überprüfen kann, ob die Verbindung zum beabsichtigten Sender noch besteht. Das erste Byte des API enthält an Bitposition 2 bis 8 die Prüfsumme, die aus dem vorhergehenden STM-N Rahmen berechnet wird. Die Überwachungseinrichtung MON liest das JO-Byte aus den STM-N Rahmen eines Nachrichtensignals. Anhand des JO-Bytes wird die Kontinuität der beabsichtigten Verbindung überprüft und mittels der Prüfsumme CRC-7 getestet, ob der vorhergehende Rahmen fehlerfrei war.

Die Überwachungseinrichtung ist über zumindest zwei Anschlüssen mit der Schaltmatrix S verbunden. Soll nun ein Nachrichtensignal überwacht werden, so wird dieses von der Eingangs/Ausgangs-Stufe I/O über die Schaltmatrix zu der Überwachungseinrichtung MON geschaltet. Diese führt die Überwachungsfunktionen aus und leitet das unveränderte Nachrichtensignal wieder zurück zur Schaltmatrix S. Von der Schaltmatrix S wird das Nachrichtensignal dann zu dem vorgesehenen Ausgang der Eingangs/Ausgangs-Stufe I/O geschaltet. Somit wird ein zu überwachendes Nachrichtensignal zweimal durch die Schaltmatrix S geschaltet: ein erstes Mal zur Überwachungseinrichtung und ein zweites Mal zum beabsichtigten Ausgang des Crossconnects. Dadurch wird eine Qualitäts- und Pfadüberwachung von Nachrichtensignalen im optischen Netz ermöglicht ohne die Transparenz und Funktionalität des Crossconnects zu beeinträchtigen.

Da die Überwachungseinrichtung protokollspezifische Funktionen ausführt, muß sie an einen bestimmten Protokolltyp oder eine Gruppe von unterschiedlichen Protokolltypen, welche sie unterscheiden und entsprechend behandeln kann, angepaßt sein. Die vorstehend beschriebene Signalüberwachung kann selbstverständlich nicht nur in Kombination mit einer Bitraten-transparenten elektrischen Schaltmatrix wie im vorliegenden Ausführungsbeispiel sondern in Kombination mit jeder Art von Schaltmatrix vorteilhaft eingesetzt werden.

Die Steuerungseinrichtung CS steuert die Funktion der Schaltmatrix S, d.h. sie gibt der Schaltmatrix S vor, welcher Matrixeingang auf welchen Matrixausgang geschaltet werden soll. Die Steuerungseinrichtung CS besitzt einen Anschluß TMN zu einem nicht gezeigten zentralen Managementsystem. Dieser Steueranschluß TMN kann z.B. auf der Basis des von IP-Routern bekannten SNMP arbeiten (Simple Network Management Protocol) oder auch mit dem von OMG (Object Management Group) spezifizierten CORBA (Common Open Request Broker Architecture) oder einem anderen für Netzwerkmanagement geeigneten Protokoll. Das zentrale Netzwerkmanagementsystem besitzt einen Überblick über das gesamte Netzwerk und kann anhand dieser Informationen entscheiden, welche Verbindungen die einzelnen Crossconnects schalten sollen. Dies wird dann über den Steueranschluß an die Steuerungseinrichtung CS des betroffenen Crossconnects mitgeteilt. Die Steuerungsseinrichtung sammelt und speichert auch die Überwachungsdaten der Überwachungsschaltung, so daß diese auf Verlangen vom zentralen Managementsystem über den Steueranschluß abgerufen werden können. Auf diesem Weg können auch Alarme an das zentrale Managementsystem gemeldet werden. Der Steueranschluß kann selbstverständlich auch ein Kanal in einem der Nachrichtensignale sein.

In Figur 2 ist ein Ausschnitt eines Netzwerks mit vier optischen Crossconnects OCX1 -OCX4 dargestellt. In dem Netzwerk ist durch die Crossconnects eine transparente Verbindung von einer Datenquelle S1 zu einer Datensenke S2 eingerichtet. Der erste Crossconnect OCX1 empfängt an einem Eingang seiner Eingangs/Ausgangs-Stufe ein Nachrichtensignal von der Datenquelle S1. Über seine Schaltmatrix schaltet er das Nachrichtensignal zu seiner Überwachungseinrichtung, die eine Überwachungsfunktion für das Nachrichtensignal ausführt und es an die Schaltmatrix zurückleitet. Die Schaltmatrix schaltet das Nachrichtensignal dann an einen Ausgang der Eingangs/Ausgangs-Stufe, der über eine optische Faser mit einem Eingang des zweiten Crossconnects OCX2 verbunden ist.

Auf gleiche Weise wird das Nachrichtensignal dann vom zweiten Crossconnect OCX2 zum dritten Crossconnect OCX3 und von dort weiter zum vierten Crossconnect OCX4 geschaltet. Der vierte Crossconnect OCX4 schaltet das Nachrichtensignal dann an einen Ausgang seiner Eingangs/Ausgangs-Stufe I/O, der mit der Datensenke S2 verbunden ist. In allen vier Crossconnects OCX1-OCX4 wird eine Überwachung der oben beschriebenen Art durchgeführt. Datenquelle und Datensenke können z.B. jeweils ein Leitungsmultiplexer sein, der aus mehreren Zufluß-Signalen (tributary signal) ein SDH-Signal aus STM-4 Rahmen erzeugt. Die optische Verbindung durch das Netzwerk wurde nur in Richtung von S1 zu S2 beschrieben kann aber natürlich auch bidirektional sein.

Durch die Überwachung in den vier optischen Crossconnects OCX1-OCX4 wird eine vorbestimmte Übertragungsqualität sichergestellt. Im Falle, daß einer der Crossconnects dabei feststellt, daß gehäuft Fehler auftreten und die Übertragungsqualität die voreingestellten Anforderungen nicht erfüllt, kann z.B. eine Alarmmeldung an das zentrale Netzwerkmanagementsystem erzeugt werden.

In Figur 3 ist dasselbe Netzwerk wie in Figur 2 gezeigt. Zusätzlich zu der Verbindung P1 über die vier Crossconnects OCX1-OCX4 ist als Schutzschaltung eine direkte Verbindung P2 von OCX1 zu OCX4 geschaltet. Dies erfolgt, indem das Nachrichtensignal in der Schaltmatrix des ersten Crossconnects OCX1 verdoppelt MC (Broadcast oder Multicast) und parallel über einen zweiten Ausgang, der mit einem Eingang von OCX4 verbunden ist, an OCX4 geschaltet wird. Die Verbindung P1 ist als aktive Verbindung eingestellt während die Verbindung P2 als Ersatz für den Fehlerfall zur Verfügung steht. Im Crossconnect OCX4 werden dann beide parallel empfangenen Signale von der Schaltmatrix zu der Überwachungsschaltung geschaltet, während nur das aktive Signal an den Ausgang zu S2 weitergeschaltet wird. Stellt die Überwachungsschaltung in OCX4 fest, daß das aktive Nachrichtensignal der Verbindung P1 gestört ist, so wird automatisch und ohne weitere Interaktion des zentralen Netzwerkmanagementsystems auf die Ersatzverbindung P2 umgeschaltet. Dadurch wird ein schneller und effektiver Schutz der Verbindung für alle Arten von Nachrichtensignalen auf der optischen Ebene gewährleistet. Aufwendige Verdopplung aller optischen Verbindungen zwischen allen Netzelementen im Netzwerk kann daher entfallen. Somit können die vorhandenen Ressourcen bei gleichem Schutz erheblich effektiver ausgenutzt werden als es bisher möglich war.

Der erfindungsgemäße Crossconnect kann auch in optischen Netzen mit Wellenlängenmultiplex eingesetzt werden. Dazu werden mehrere Eingangs/Ausgangs-Anschlüsse des Crossconnects mit einem optischen Wellenlängenmultiplexer verbunden. Dies ist in Figur 4 dargestellt. Acht Eingangs/Ausgangs-Anschlüsse des optischen Crossconnects OCX aus Figur 1 sind mit den Zuflußanschlüssen eines Wellenlängenmultiplexer MUX verbunden. Der Wellenlängenmultiplexer fügt die acht parallel vom Crossconnect empfangenen optischen Signale SW im Wellenlängenmultiplex zu einem Ausgangssignal WDM zusammen. In der Gegenrichtung demultiplext er ein empfangenes wellenlängengemultiplextes optisches Signal WDM in acht einzelne optische Signale, die er an den Zuflußanschlüssen an den optischen Crossconnect weiterleitet. Die Anzahl von acht ist hierbei willkürlich gewählt.

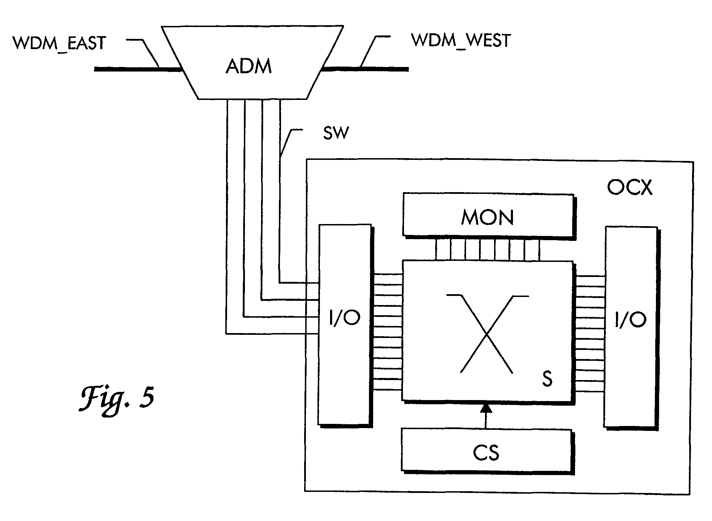

In diesem Ausführungsbeispiel ist der Wellenlängenmultiplexer ein Leitungsmultiplexer. Genauso können aber auch einer oder mehrere Anschlüsse eines Add/Drop-Multiplexers mit dem optischen Crossconnect verbunden werden. Dies ist in Figur 5 gezeigt. Der Add/Drop-Multiplexer ADM besitzt einen Ostanschluß WDM_EAST und einen Westanschluß WDM-WEST, jeweils für wellenlängengemultiplexte Signale. Er ist für den Einsatz in einem Ringnetz vorgesehen, wobei ein wellenlängengemultiplextes Signal am Ostanschluß empfangen und am Westanschluß gesendet wird. Für gedoppelte Ringe können die Anschlüsse auch bidirektional ausgeführt sein, um gleichzeitige Übertragung im Uhrzeigersinn und gegen den Uhrzeigersinn zu ermöglichen. Der Add/Drop-Multiplexer ist in der Lage, einzelne optische Kanäle (Wellenlängen) aus dem wellenlängengemultiplexten Signal herauszunehmen und an einem Zuflußanschluß auszugeben (Drop) oder an einem Zuflußanschluß empfangene optische Signale als neue Kanäle in das wellenlängengemultiplexte Signal einzufügen (Add). In diesem Ausführungsbeispiel sind nun vier Zuflußanschlüsse mit Eingangs/Ausgangs-Anschlüssen des optischen Crossconnects OCX verbunden.

## Patentansprüche

1. Optischer Crossconnect (OCX) zum Schalten optischer Nachrichtensignale in einem optischen Transportnetz auf der physikalischen Schicht, mit:
- einer Anzahl breitbandiger optischer Eingänge jeweils zum Empfangen eines optischen Nachrichtensignals mit einem einzigen optischen Kanal, wobei jedem der optischen Eingänge ein O/E-Konverter zugeordnet ist zum Umwandeln des an dem jeweiligen optischen Eingang empfangenen optischen Nachrichtensignals in ein elektrisches Nachrichtensignal,
- einer Anzahl optischer Ausgänge jeweils zum Senden eines optischen Nachrichtensignals mit einem einzigen optischen Kanal, wobei jedem der optischen Ausgänge ein E/O-Konverter zugeordnet ist zum Umwandeln eines elektrischen Nachrichtensignals in das zu sendende optische Nachrichtensignal,
- einer transparenten Raumschaltmatrix (S), die eingangsseitig mit den optischen Eingängen und ausgangsseitig mit den optischen Ausgängen elektrisch verbunden ist, zum wahlfreien Verschalten der elektrischen Nachrichtensignalen von den optischen Eingängen zu den optischen Ausgängen und
- einer Überwachungseinrichtung (MON) die mit mindestens zwei Matrixanschlüssen verbunden ist um von der Schaltmatrix (S) ein elektrisches Nachrichtensignal zu empfangen, dieses Nachrichtensignal auf Übertragungsfehler zu überwachen und das Nachrichtensignal an die Schaltmatrix zurückzuschalten..

2. Optischer Crossconnect nach Anspruch 1, bei dem die Schaltmatrix ungetaktet arbeitet.

3. Optischer Crossconnect nach Anspruch 1, bei dem die Überwachungseinrichtung (MON) für einen oder mehrere vorbestimmte Protokolltypen angepaßt ist.

4. Optischer Crossconnect nach Anspruch 3, bei dem die Überwachungseinrichtung (MON) für SDH-Signale oder SONET-Signale angepaßt ist und zur Fehlerprüfung eine Prüfsumme aus dem in Rahmenköpfen der Nachrichtensignale enthaltenen B1-Byte und/oder JO-Byte verwendet.

5. Optischer Crossconnect nach Anspruch 1, bei dem die Eingänge und Ausgänge zu einer Eingangs/Ausgangs-Stufe (I/O) zusammengefaßt sind.

6. Optischer Crossconnect nach Anspruch 1 mit einer Steuerungseinrichtung (CS) zum Steuern der Schaltzustände der Schaltmatrix.

7. Verfahren zum Schalten optischer Nachrichtensignale in einem optischen Transportnetz auf der physikalischen Schicht, mit den Schritten:
- Empfangen eines breitbandigen optischen Nachrichtensignals mit einem einzigen optischen Kanal an einem Eingang,
- Umwandeln des empfangenen optischen Nachrichtensignals in ein elektrisches Nachrichtensignal durch einen O/E-Konverter,
- Schalten des elektrischen Nachrichtensignals von einer transparenten Raumschaltmatrix (S) zu einer Überwachungseinrichtung (MON),
- Überwachen des elektrischen Nachrichtensignals auf Übertragungsfehler,
- Zurückleiten des elektrischen Nachrichtensignals zu der Schaltmatrix (S) zwecks nachfolgendem wahlfreien Verschalten zu einem von mehreren Ausgängen,
- wahlfreies Verschalten der elektrischen Nachrichtensignalen mittels der Schaltmatrix (S) zu einem der Ausgänge,
- Umwandeln des elektrischen Nachrichtensignals in ein zu sendendes optisches Nachrichtensignal mit einem einzigen optischen Kanal durch einen E/O-Konverter,
- Senden des optischen Nachrichtensignals

## Claims

1. Optical cross-connect (OCX) for switching optical information signals in an optical transport network on the physical layer, with:
- a number of broadband optical inputs each for receiving an optical information signal with a single optical channel, each of the optical inputs being assigned an optoelectric converter for converting the optical information signal received at the respective optical input into an electrical information signal,
- a number of optical outputs each for sending an optical information signal with a single optical channel, each of the optical outputs being assigned an electro-optical converter for converting an electrical information signal into the optical information signal to be sent,
- a transparent space switching matrix (S), which is electrically connected on the input side to the optical inputs and on the output side to the optical outputs, for freely switching the electrical information signals from the optical inputs to the optical outputs and
- a monitoring facility (MON) which is connected to at least two matrix contacts in order to receive an electrical information signal from the switching matrix (S), monitor this information signal for transmission errors and switch the information signal back to the switching matrix.

2. Optical cross-connect according to Claim 1, in which the switching matrix works unclocked.

3. Optical cross-connect according to Claim 1, in which the monitoring facility (MON) is adapted for one or more predetermined protocol types.

4. Optical cross-connect according to Claim 3, in which the monitoring facility (MON) is adapted for SDH signals or SONET signals and for error checking uses a checksum from the B1 byte and/or J0 byte contained in frame headers of the information signals.

5. Optical cross-connect according to Claim 1, in which the inputs and outputs are grouped in an input/output stage (I/O).

6. Optical cross-connect according to Claim 1 with a control facility (CS) for controlling the switching states of the switching matrix.

7. Method for switching optical information signals in an optical transport network on the physical layer, with the steps:
- receiving of a broadband optical information signal with a single optical channel on an input,
- conversion of the received optical information signal into an electrical information signal by an optoelectric converter,
- switching of the electrical information signal from a transparent space switching matrix (S) to a monitoring facility (MON),
- monitoring of the electrical information signal for transmission errors,
- return routing of the electrical information signal to the switching matrix (S) for subsequent free switching to one of several outputs,
- free switching of the electrical information signals by means of the switching matrix (S) to one of the outputs,
- conversion of the electrical information signal by an electro-optical converter into an optical information signal to be sent, with a single optical channel
- sending of the optical information signal

## Revendications

1. Brasseur optique (OCX) destiné à commuter des signaux d'information optiques sur la couche physique dans un réseau de transport optique comprenant :
- un certain nombre d'entrées optiques à large bande qui sont à chaque fois destinées à recevoir un signal d'information optique avec un canal optique unique, un convertisseur O/E étant associé à chacune des entrées optiques pour convertir le signal d'information optique reçu sur l'entrée optique correspondante en un signal d'information électrique,
- un certain nombre de sorties optiques qui sont à chaque fois destinées à émettre un signal d'information optique avec un canal optique unique, un convertisseur E/O étant associé à chacune des sorties optiques pour convertir un signal d'information électrique en signal d'information optique à émettre,
- une matrice de commutation dans l'espace transparente (S) qui est reliée électriquement du côté de l'entrée aux entrées optiques et du côté de la sortie aux sorties optiques afin de connecter aléatoirement les signaux d'information électriques des entrées optiques vers les sorties optiques et
- un dispositif de surveillance (MON) qui est relié avec au moins deux bornes de la matrice afin de recevoir de la matrice de commutation (S) un signal d'information électrique, de vérifier si ce signal d'information comporte des erreurs de transmission et de renvoyer le signal d'information à la matrice de commutation.

2. Brasseur optique selon la revendication 1, avec lequel la matrice de commutation fonctionne de manière non cadencée.

3. Brasseur optique selon la revendication 1, avec lequel le dispositif de surveillance (MON) est adapté pour un ou plusieurs types de protocole prédéfinis.

4. Brasseur optique selon la revendication 3, avec lequel le dispositif de surveillance (MON) est adapté pour des signaux SDH ou des signaux SONET et emploie, pour vérifier la présence d'erreurs, une somme de contrôle composée de l'octet B1 et/ou de l'octet J0 contenus dans les en-têtes de trame des signaux d'information.

5. Brasseur optique selon la revendication 1, avec lequel les entrées et les sorties sont regroupées en un étage d'entrée/sortie (I/O).

6. Brasseur optique selon la revendication 1, comprenant un dispositif de commande (CS) pour commander les états de commutation de la matrice de commutation.

7. Procédé destiné à commuter des signaux d'information optiques sur la couche physique dans un réseau de transport optique comprenant les étapes suivantes :
- Réception d'un signal d'information optique à large bande avec un canal optique unique sur une entrée,
- Conversion du signal d'information optique à large bande reçu en un signal d'information électrique par un convertisseur O/E,
- Acheminement du signal d'information électrique d'une matrice de commutation dans l'espace transparente (S) vers un dispositif de surveillance (MON),
- Surveillance du signal d'information électrique pour vérifier s'il comporte des erreurs de transmission,
- Renvoi du signal d'information électrique à la matrice de commutation (S) en vue de sa commutation aléatoire ultérieure sur une parmi plusieurs sorties,
- Commutation aléatoire des signaux d'information électriques au moyen de la matrice de commutation (S) vers l'une des sorties,
- Conversion du signal d'information électrique en un signal d'information optique à émettre avec un canal optique unique par un convertisseur E/O,
- Envoi du signal d'information optique.
